# EUROPEAN PATENT APPLICATION

(11) **EP 3 113 069 A1**
(43) Date of publication of application: **04.01.2017**
(21) Application number: 15306044.7
(22) Date of filing: 30.06.2015
(51) Int. Cl.: G06K 9/00, G06K 9/46

(54) **METHOD AND APPARATUS FOR DERIVING A FEATURE POINT BASED IMAGE SIMILARITY MEASURE**

(71) Applicant: Thomson Licensing, 92130 Issy-les-Moulineaux (FR)
(72) Inventor: Winter, Marco, 30659 Hannover (DE); Theis, Oliver, 32689 Kalletal (DE); Brune, Thomas, 30449 Hannover (DE)

(57) **Abstract**

Feature points in two images to be compared are detected, position information of the feature points and local neighborhood descriptors of the feature points are derived. The image similarity measure is derived from distance measures of the descriptors of co-positioned non-repetitive feature points. A feature point is considered as non-repetitive if its local neighborhood descriptor is not similar to that of any other feature point of the image, and/or if its local neighborhood descriptor and a second local neighborhood descriptor of a second feature point of the other image are single most similar to each other, and/or if its local neighborhood descriptor is similar to that of only one feature point of the other image.

## Description

### Field of the invention

The present invention relates to the technical area of image comparison, in particular to feature point based image comparison Furthermore, the invention relates to a feature point based method and an apparatus for finding, in a set of given images, a most similar one to a workpiece image.

### Background of the invention

In a digital movie production context, finding the origin of a given processed image in a pool of raw and interim material is a recurring task. In such a context, the finding criterion should be tolerant against typical processing steps like cropping, format change, or recoloring.

Under the assumption that a workpiece image at hand is known to have been manipulated for example to fit to a certain video standard, or it has undergone postproduction steps such as cutting, color grading, resizing or the like, it is desirable to find the original image or image sequence for example for performance of further or alternative post production steps. Provided that the master data, which means the original takes captured during movie making, are available, finding the corresponding take or sequence of images, for example for the purpose of re-editing video data, is a rather time consuming process.

US2012/0011119A1 discloses a keypoint based object recognition system performing at least one of intra-object pruning and inter-object pruning, as well as keypoint clustering and selection. The intra-object pruning removes similar and redundant keypoints within an object and different views of the same object. It may be used to generate and associate a significance value, such as a weight, with respect to the remaining keypoint descriptors. Inter-object pruning retains the most informative set of descriptors across different objects. This is performed by characterizing the discriminability of the keypoint descriptors for all of the objects and by removing keypoint descriptors with a discriminability that is less than a threshold. Additionally, a mobile platform may download a geographically relevant portion of the database and perform object recognition by extracting features from the workpiece image and using determined confidence levels for each query feature during outlier removal.

Local descriptors describing properties of an image patch surrounding a feature point are for instance disclosed in Mikolajczyk et al., "A Performance Evaluation of Local Descriptors", IEEE Transactions on Pattern Analysis and Machine Intelligance, Vol. 27, No. 10, October 2005.

### Invention

It is an object of the invention to provide a fast and reliable method and apparatus for deriving a feature point based image similarity measure and for finding, in a set of given images, a most similar image compared to a workpiece image.

The object is solved by a method of deriving a feature point based image similarity measure, wherein feature points in two images to be compared are detected, position information of the feature points is derived and local neighborhood descriptors of the feature points are derived, wherein the local neighborhood descriptors do not comprise position information. The image similarity measure is then derived from distance measures of the local neighborhood descriptors of co-positioned non-repetitive feature points in the two images. A feature point in an image is considered as non-repetitive
- if its local neighborhood descriptor is not similar to that of any other feature point of the image, and/or
- if its local neighborhood descriptor and a second local neighborhood descriptor of a second feature point of the other image are single most similar to each other, and/or
- if its local neighborhood descriptor is similar to that of only one feature point of the other image.

In particular, the local neighborhood descriptor of the feature point is derived from a pixel area around the feature point. The pixel area may have a predetermined size, for example a certain diameter. Furthermore, the pixel areas can be of almost identical size for all the feature points, which are considered.

Advantageously, the method of finding the image similarity measure enables search engines, which apply this similarity measure to reduce the search effort that has to be performed manually to a small fraction. The more or less obviously non-related images are automatically excluded, leaving only the promising candidates. The particular strength of the approach is that a workpiece image, which is one of the two images to be compared, can be assigned to one specific original image of an original image sequence even when it is part of a rather static scene. The similarity measure significantly enhances the precision of the matching. This renders the image search engine significantly more effective. It saves tremendous amount of time for the user. In particular, this applies to the post processing of movies which is speeded up significantly.

It is an important aspect of the invention that only non-repetitive feature points in the two images are compared. In order to discriminate between repetitive feature points, which for example can be found in an image showing a regularly structured stone wall, and non-repetitive feature points, three criteria shall be considered. One or more of these criteria has to be met, if a feature point shall be considered as a non-repetitive feature point.

According to the first criterion, a feature point in an image is considered as non-repetitive, if its local neighborhood descriptor is not similar to another local neighborhood descriptor of any other feature point in the same image. This criterion serves to exclude the repetitive feature points, which result from regularly structured image content.

A second criterion to classify a feature point as non-repetitive is as follows. A first feature point, identified in a first image, is considered to be a non-repetitive feature point if its first local neighborhood descriptor and a single second local neighborhood descriptor of a second feature point, identified in a second image, are single most similar to each other. In other words, when starting with the first feature point, the second feature point is the best match, which means that the first and the second local neighborhood descriptor have a minimum distance from each other. This best match criterion, however, has to apply in both directions. This means that in addition to the first match, when starting with the second feature point in the second image, the first feature point in the first image has to be the best match for it.

The third criterion is somewhat less strict than the second one. According to this third criterion, a feature point is considered as non-repetitive if its local neighborhood descriptor is similar to the local neighborhood descriptor of only one feature point in the other image. In other words, a first feature point in the first image is considered as non-repetitive if its first local neighborhood descriptor is similar to a second local neighborhood descriptor of a second feature point in the second image and this second feature point is the only match in the second image. Naturally, this applies when the first and the second image are the images to be compared.

In an advantageous embodiment of the invention, the method is enhanced in that the distance measurement is an Euclidian distance measurement. The distance is in particular measured between the local neighborhood descriptors being vectors of scalars. The scalars are derived from a respective pixel area around the feature point. Each scalar describes a property of the feature point. This is derived from the surrounding pixel area. Hence, this renders each neighborhood descriptor more or less unique provided the feature point is a non-repetitive one. Note that, as said before, the local neighborhood descriptors do not comprise position information.

In still another embodiment of the invention, the method is further enhanced in that a distance between the two positions of the feature points is determined and the feature points are considered as co-positioned if the distance is below a predetermined threshold. In other words, the geometrical arrangement of the two feature points in the two images to be compared has to be almost the same.

The method is further enhanced in that the two images compared are resized to approximately a same predetermined resolution before the detection of feature points. The images are size-rectified for example to 1920x1080 pixels.

The object is further solved by an apparatus for deriving a feature point based image similarity measure. The apparatus comprises a feature point detection unit. This is equipped and configured to detect feature points in two images to be compared. Furthermore, the apparatus comprises a feature point analysis unit equipped and configured to derive position information of the feature points and to derive local neighborhood descriptors of the feature points, wherein the local neighborhood descriptors do not comprise position information. The apparatus is enhanced by comprising an image similarity measurement unit. This unit is equipped and configured to determine the image similarity measure from distance measures of the local neighborhood descriptors of co-positioned non-repetitive feature points in the two images. A feature point is considered as non-repetitive by the image similarity measurement unit
- if its local neighborhood descriptor is not similar to that of any other feature point of the image, and/or
- if its local neighborhood descriptor and a second local neighborhood descriptor of a second feature point of the other image are single most similar to each other, and/or
- if its local neighborhood descriptor is similar to that of only one feature point of the other image.

Same or similar advantages which were mentioned relative to the above referenced method apply to the apparatus for deriving the feature point based image similarity measure. Hence these shall not be repeated.

In an advantageous embodiment of the invention the apparatus is enhanced in that the feature point analysis unit is configured to perform an Euclidian distance measurement between the local neighborhood descriptors. In particular, the descriptors are vectors of scalars derived from a pixel area around the feature point.

The apparatus is in particular further enhanced in that the feature point analysis unit is equipped and configured to determine a distance between the two positions of the feature points, and to consider the feature points as co-positioned if the distance is below a predetermined threshold.

In still another advantageous embodiment of the invention, the apparatus is further enhanced in that it comprises a resizing unit, which is configured to resize the two images to a same predetermined resolution before the detection of feature points.

The apparatus for deriving a feature point based image similarity measure is particularly suitable for application in a post-production environment.

The object is also solved by a method of finding, in a set of given images, a most similar one to a workpiece image. According to this method, for each image of the set of given images, feature points are detected in the image. Subsequently, position information of the detected feature points and local neighborhood descriptors of the feature points are derived. The local neighborhood descriptors do not comprise position information. This information is then stored in a database. In particular, the position information and the local neighborhood descriptor of the detected feature points are stored as a fingerprint of the image. This is performed for all the images to be searched in order to build up a database suitable to be searched. The database is advantageously of reasonable size and is therefore portable. It can be searched without undue computational effort.

The method according to aspects of the invention further comprises, for the workpiece image, detecting feature points in the workpiece image, deriving position information of the detected feature points and deriving local neighborhood descriptors of the feature points, wherein the local neighborhood descriptors do not comprise position information.

Subsequently, an image similarity measure between co-positioned non-repetitive feature points in the workpiece image and in the images of the set of given images is established by performing the following steps for each feature point in the workpiece image:
- measuring a distance between the local neighborhood descriptor of the feature point of the workpiece image and the local neighborhood descriptors stored for the images of the set of given images and
- determining a distance between the position of the feature point of the workpiece image and the positions of the feature points in the images of the set of given images.

The feature points are considered as co-positioned if the distance is below a predetermined threshold. Furthermore, a feature point is considered as non-repetitive
- if its local neighborhood descriptor is not similar to that of any other feature point of the image, and/or
- if its local neighborhood descriptor and a second local neighborhood descriptor of a second feature point of the other image are single most similar to each other, and/or
- if its local neighborhood descriptor is similar to that of only one feature point of the other image.

Finally, a most similar image of the set of given images is the image having a highest similarity measure. This is to be understood within the meaning of having a lowest distance between the local neighborhood descriptor and/or the lowest distance between the positions of the feature points.

In particular, the most similar image is the one having a lowest distance between the local neighborhood descriptors, wherein the distance between the positions of the feature points is below a predetermined threshold value.

Advantageously, the search for the best matching image is performed by comparing a fingerprint of the workpiece image with the fingerprints of the images to be searched. The latter are stored in a database of reasonable size, which can be searched significantly faster than the image data itself.

The best matches can be provided to a user, for example via a user interface. The user then manually selects the final image. Hence, the user is relieved from almost the entire workload in the search process. His interaction is only necessary at the very last step.

For normal takes with moving objects the results are nearly unambiguous, which means that the user is provided with an image exact search result. The user's interaction will only be required in rather static scenes where the search results may be ambiguous.

Additional information about the image sequences to be searched can be added to the database and may be used to speed-up the query process. For example, an information about the rate of change of the content may be stored. A most simple way for implementation of this is a flag indicating, for each image in a sequence, whether or not the image is part of a static scene. A comparison of the workpiece image with pictures in a static scene is obviously a waste of time. In this case, only noise will be used to distinguish the images. For static scenes only one image needs to be checked. The other images of the static scene will be skipped to save time.

When the workpiece image is from a static scene, and when not only the single workpiece image but also the entire workpiece image sequence is accessible, a further improvement is proposed as follows: In the workpiece sequence, the boundaries of the static scene that contains the workpiece image are searched, with other words the last image before the static scene and the first image after the static scene. For these boundary images best matches are then detected in the database. Then for each workpiece image from the static scene, associated images in the database can be derived based on nothing more than the relative position of the workpiece image within the static scene. With other words, the true temporal position, somewhere within the static scene, may be assigned by evaluating the distance of the workpiece image to the boundary images of the static scene. This makes a precise assignment possible even in the case of a static scene.

Other sources of information may be used to link groups of images in the database. Such links may enhance the quality of the search result. So, if there is one match detected, then automatically, the other versions of the same image may be shown. This is advantageous for example when the image content has undergone strong content changes due to augmented reality imprints (VFX).

The method of finding a most similar image to a workpiece image is further enhanced in that for each image of the set of given images, the detected feature points are minimized before storing them as a fingerprint of the image. This is performed by comparing the local neighborhood descriptors of the feature points in each image, wherein feature points having similar local neighborhood descriptors are deleted. For example, feature points detected on a regularly structured wall will be deleted.

Finally, the object is solved by an apparatus for finding, in a set of given images, a most similar one to a workpiece image. The apparatus comprises a database generation unit, which is equipped and configured to detect, for each image of the set of given images, feature points, to derive position information of the detected feature points and to derive local neighborhood descriptors of the feature points, the local neighborhood descriptors not comprising position information. Furthermore, the database generation unit is equipped and configured to store the position information and the local neighborhood descriptors of the detected feature points of one image as a fingerprint of the image in a database.

The apparatus further comprises a workpiece image fingerprint generation unit, equipped and configured to detect feature points in the workpiece image, to derive position information of the detected feature points and to derive local neighborhood descriptors of the feature points, the local neighborhood descriptors not comprising position information.

The workpiece image fingerprint generation unit is further equipped and configured to establish an image similarity measure between co-positioned non-repetitive feature points in the workpiece image and the images of the set of given images by performing the following steps for each feature point in the workpiece image:
- measure a distance between the local neighborhood descriptor of the feature point of the workpiece image and the local neighborhood descriptors stored for the images of the set of given images and
- determine a distance between the position of the feature point of the workpiece image and the positions of the feature points in the images of the set of given images.
   The apparatus is further configured in that feature points are considered as co-positioned if their geometric distance is below a predetermined threshold. Furthermore, a feature point is considered as non-repetitive
- if its local neighborhood descriptor is not similar to that of any other feature point of the image, and/or
- if its local neighborhood descriptor and a second local neighborhood descriptor of a second feature point of the other image are single most similar to each other, and/or
- if its local neighborhood descriptor is similar to that of only one feature point of the other image.

Finally, the apparatus for finding a most similar image to the workpiece image is equipped and configured to select, as a most similar image of the set of given images, the image having a highest similarity measure within the meaning of having a lowest distance between the local neighborhood descriptors and/or the lowest geometrical distance between the position of the feature points.

In an advantageous embodiment of the invention, the apparatus is further enhanced in that it comprises a database minimization unit, equipped and configured to minimize, for each image of the set of given images, the detected feature points before storing them as a fingerprint of the image, by comparing the local neighborhood descriptors of the feature points in each image, wherein feature points having similar local neighborhood descriptors are deleted.

Same or similar advantages, which have been mentioned with respect to the method of finding a best matching image also apply to the above apparatus in a same or similar way and are therefore not repeated.

Further characteristics of the invention will become apparent from the description of the embodiments according to the invention together with the claims and the included drawings. Embodiments according to the invention can fulfill individual characteristics or a combination of several characteristics.

The invention is described below, without restricting the general intent of the invention, based on exemplary embodiments, wherein reference is made expressly to the drawings with regard to the disclosure of all details according to the invention that are not explained in greater detail in the text. The drawings show in:
- **FIG. 1**: a scenario in which feature points and local neighborhood descriptors are generated,
- **FIGs. 2 and 3**: illustrate various methods of extracting fingerprints from images of an image stream,
- **FIG. 4**: illustrates a search for the origin of the workpiece image.

In the drawings, the same or similar types of elements or respectively corresponding parts are provided with the same reference numbers in order to prevent the item from needing to be reintroduced.

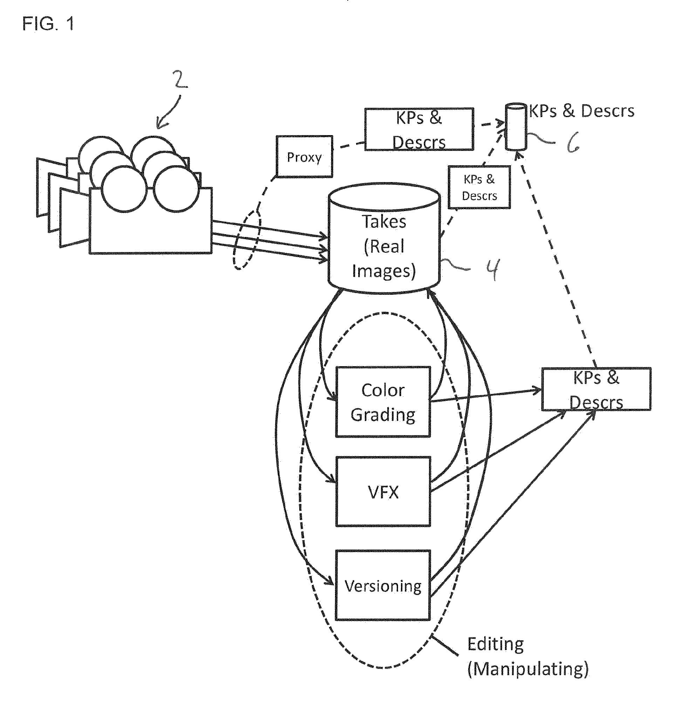

**FIG. 1** symbolically depicts a simplified scenario, in which the method and apparatus according to aspects of the invention are applicable.

For example, a plurality of takes, schematically represented by a plurality of cameras **2,** is generated for example during a movie production. The takes are stored in a first database **4.** During post-production or editing of the takes, various manipulations are performed. For example, there is color grading, VFX or Versioning of the original takes so as to generate for example various versions for cinema, Blu-ray or DVD. The post-processing is summarized by labeling the mentioned steps with Editing or Manipulating. The results of these postprocessing or editing steps are also stored in the database **4.**

According to the invention, feature points **KP** and local neighborhood descriptors **Descrs** are then determined. This can be done either from the full size images as stored in the databas 4, or, alternatively, from so-called "proxies", which are reduced size preview versions generated during capture. The feature points **KP** and the corresponding local neighborhood descriptors **Descrs** of these feature points are stored in a second database **6.**

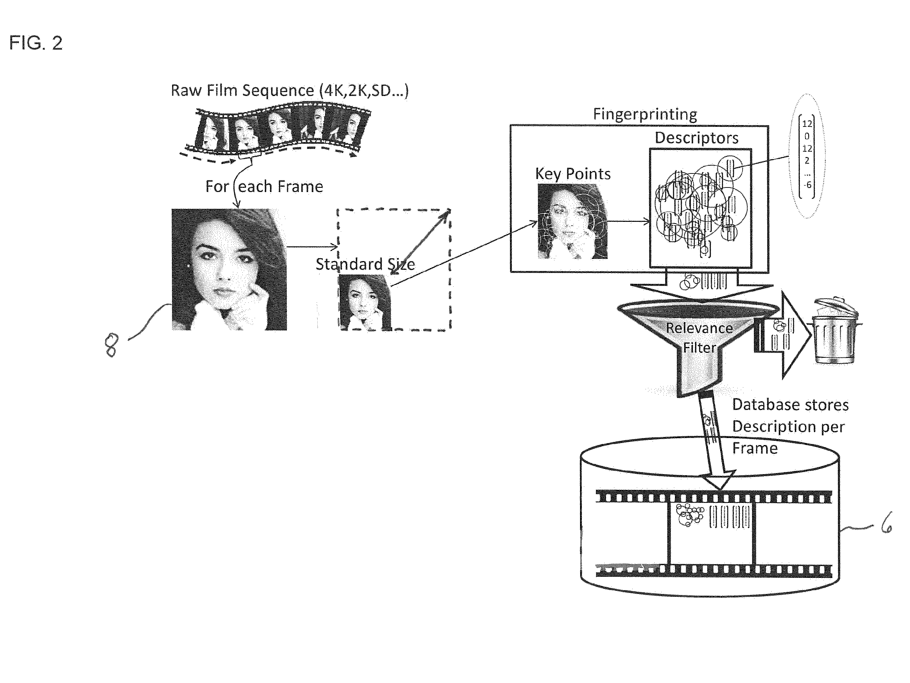

The process of generating feature points and local neighborhood descriptors is further illustrated in **FIG. 2****.**

Starting with a raw film sequence, a respective one of the images 8 may firstly be scaled or resized to a standardized picture resolution, e.g. 1920x1080 px. A corner detector detects the feature points (illustrated by vertical vectors) in the resized image. This information describes an area (illustrated by a circle) around each feature points (e.g. a radius) next beside the x- and y-coordinates. This pixel area shall be considered as the area of the relevant pixels describing the pixels making this feature point more or less unique. Then the descriptors of each feature point are generated. This is a vector of scalars, wherein each scalar describes a property of the feature point. The property is derived from the relevant pixel area of this feature point. Now, a set of feature points with as many descriptors has been generated.

Furthermore, there is a relevance filter for minimizing the detected feature points before storing the fingerprint of the image. This is performed by comparing the local neighborhood descriptors of the feature points in one and the same image. Feature points having similar or identical local neighborhood descriptors are deleted. For example, feature points detected on a regularly structured wall will be deleted.

In the database 6, for each image 8, the feature points and descriptors are the fingerprint of the image 8.

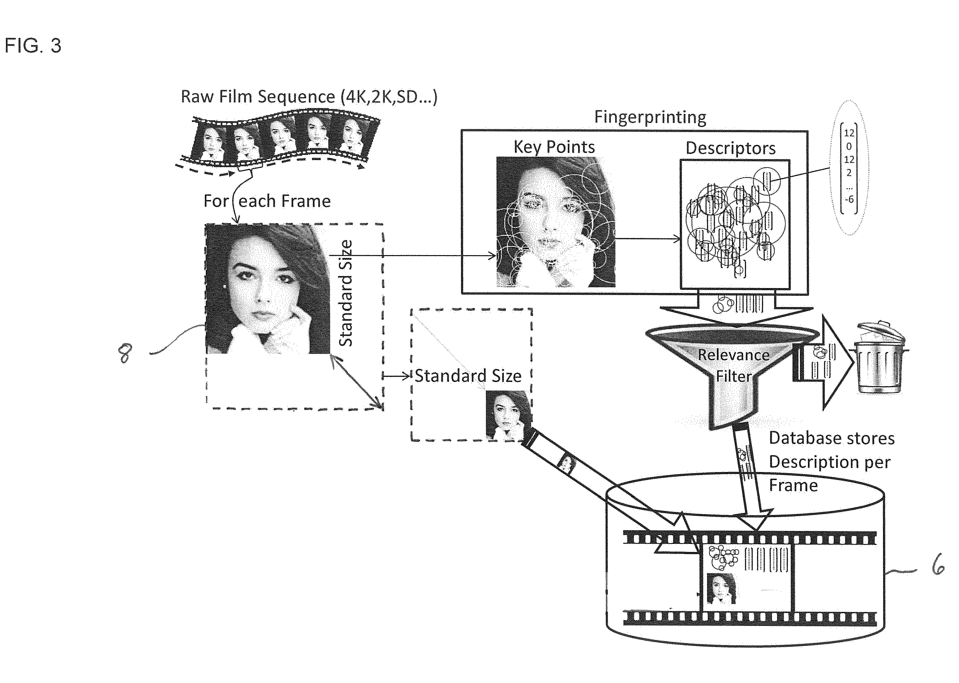

FIG. 3 describes another method on how the extraction of the fingerprints for one image sequence may be performed. In this embodiment, the fingerprints for the exemplary chosen raw film sequence are stored together with a small image version of the original image 8. Here, the small image may be used for a comparison as well or may be sent to the user to help for a final user based comparison.

The processes illustrated in FIGs. 2 and 3 are performed for the set of images to be searched before the search for a workpiece image is started. By pre-processing all the images in the raw film sequence the feature points and descriptors are already provided in the database 6. The workpiece image will be compared with the entities in this database. For this purpose, the workpiece image itself is firstly analyzed. The analysis will be outlined below.

An image is given it is called the workpiece image. The origin of this image shall be found in the set of given images, for example in the image or raw film sequence.

The actual search is performed by comparing the fingerprint of the workpiece image with the fingerprints of the image sequence sets in the database 6. This is performed by establishing a similarity measure.

The image similarity measure is derived from distance measures of the local neighborhood descriptors of co-positioned non-repetitive feature points in the workpiece image and a respective one of the images to be searched.

It is an important aspect of the invention that only non-repetitive feature points in the images are compared. In order to discriminate between repetitive feature points, which for example can be found in an image showing a regularly structured stone wall, and non-repetitive feature points, three criteria shall be considered. One or more of these criteria has to be met, if a feature point shall be considered as a non-repetitive feature point.

According to the first criterion, a feature point is considered as non-repetitive, if its local neighborhood descriptor is not similar to another local neighborhood descriptor of any other feature point in the same image. This is to exclude the (repetitive) feature points, which result from regularly structured image content, for example from the aforementioned regularly structured brick wall.

A second criterion applied to find a non-repetitive feature point is as follows. A first feature point, which is identified in a first image, is considered as non-repetitive if its first local neighborhood descriptor and a further or second local neighborhood descriptor of a further or second feature point, which is identified in a further or second image, are single most similar to each other. In other words, when starting with the first feature point, the second feature point is the best match, which means that the first and the second local neighborhood descriptor have a minimum distance from each other. This best match criterion, however, has to apply in both directions. This means that in addition to the first match event, when starting with the second feature point in the second image, the first feature point in the first image has to be the best match for it.

The third criterion is little less strict than the second one. According to this third criterion, a feature point is considered as non-repetitive if its local neighborhood descriptor is similar to the local neighborhood descriptor of only one feature point in the other image. In other words, a first feature point in the first image is considered as non-repetitive if its first local neighborhood descriptor is similar to a second local neighborhood descriptor of a second feature point in the second image and this second feature point is the only match in the second image. Naturally, this applies when the first and the second image are the images to be compared.

The comparison of the two images works as follows. Firstly, the feature points must be detected successfully in the images, then the similarity of the local neighborhood descriptors are checked.

This first step of the comparison of two images (for example an image A and an image B) is done by detecting for each feature point of image A the two best descriptors in B. This "best match" means that the Euclidian distance between the two descriptor vectors are minimal. However, these matches may be mismatches for several reasons. This is because feature points in the images may be similar, for example due to a regular structure of a wall, which is depicted. Such potential mismatch candidates can be detected by investigating how close the Euclidian distance between the best and the second best descriptor match are. If both descriptors match well, then this feature point is not unique enough in the image. Such feature points are skipped. In other words, they do not fulfill the above referenced first criterion and are not considered as non-repetitive.

A further check is subsequently performed. It is done by searching for the two best matching descriptors for the feature points of image B and checking whether the identical descriptors will be found. A feature point is skipped if the match from image A to B is not the same for the corresponding feature point search for image B from image B to A. This in other words means that the second criterion is not met, the local neighborhood descriptor and a second local neighborhood descriptor are not single most similar to each other. These feature points are skipped because they are not considered as non-repetitive.

The comparison of the two images works then proceeds with a check of the geometrical arrangement of the matched feature points. This needs to be equal or at least the feature points need to close to each other in the compared images.

The second step of the comparison of the two images may be realized by a detection of the geometrical conformity of the found feature point matches. Those feature points are skip, which do not fit in the overall similar geometrical arrangement of the feature points, which means when comparing the feature point arrangement in image A vs. the feature point arrangement in image B. This step is particularly helpful in the case that the two images contain similar objects, but in a different arrangement. Such two images are obviously not related. In other words, the corresponding feature points are not considered as co-positioned.

Finally, in a third step, the number of successful matches of feature points is counted. The higher the number of such matches the more similar the images are. If the origin of the workpiece image is in the compared image sequence, then the origin should provide the most matches.

The best matches for each workpiece image are provided to the user, for example via a user interface. The user then selects the final image. Hence, the user is part of the search process, however, his interaction is reduced to an absolute minimum amount of work at the very last step. For takes with moving objects the matching results are usually unambiguous, which means the user is provided a matching image being the exact answer. The user does not need to complete the search. Only in rather very static scenes the results may be ambiguous.

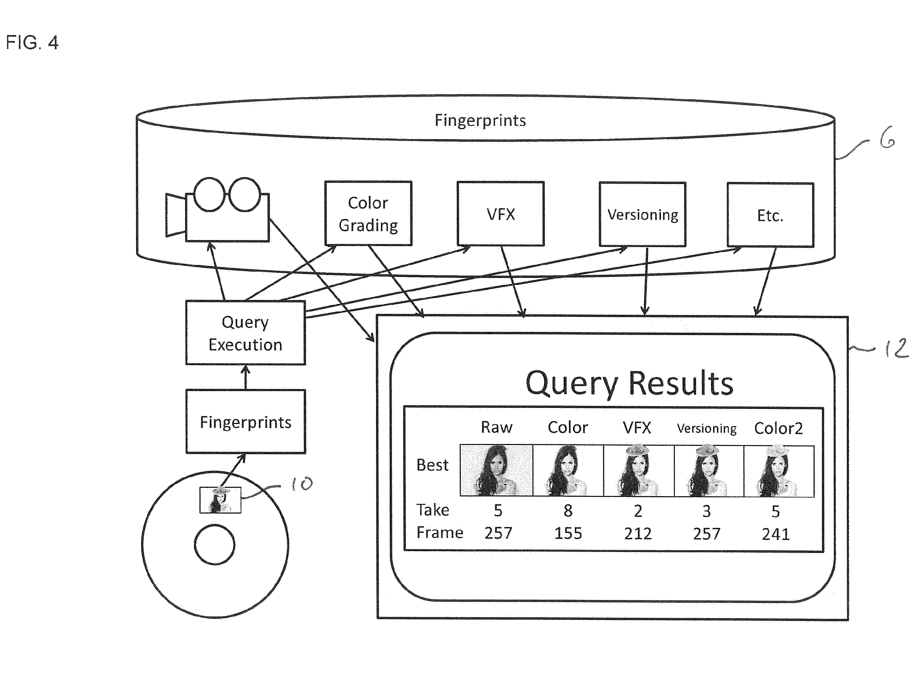

FIG. 4 illustrates a search for the origin of a workpiece image 10 being for example stored on a CD. The origin of the workpiece image 10 shall be derived by the search process. For example, there is an image sequence from a DVD. Let's assume it is clear which set of takes it has been derived from, i.e. the database of the original takes is available. The user wants to identify the original image. The original images have been manipulated to fit to the DVD format by cropping, color grading, resizing, color depth adaptations, vfx, etc. As usual, no or nearly no documentation or metadata is available to reassign the images of the DVD to the original takes and images. The search shall lead to the original take(s) and the exact image of this original take(s) the workpiece image belongs to.

To achieve this, at first, the fingerprint for the workpiece image 10 is generated. Then a search in the database 6 is performed - in all groups and different versions. After this, the best matches of each group are presented to the user on a user terminal 12. The entire concept can be regarded as consisting of two parts. The first part is the generation of a database 6. The purpose of the database 6 is to enable a user to check, whether a specific image has its origin in the image sequences represented by the database 6 and which sequence and which image it belongs to. The second part is the actual image query - it is the process of searching in the database 6 for a specific image. The result of the image query is the indicating of one specific take and one specific image of this take. The takes themselves may be evolutionary changed (color grading, vfx, etc.) and stored in the same database 6 as different versions of the same content. This is referred to as grouping. In such cases hits for each version or group may be indicated. So, even the history of the workpiece image 10 becomes visible. For each group the best matches shall be indicated to the user, e.g. by the user terminal 12. If there are several good matches, then more than one take/image of a group may be indicated as result. In this case a further step has to be done to do the final selection, e.g. by the user or by another automatic process.

Due to the necessary marriage of the two tasks each task takes care of the other task. This means on the one hand that the database is as small as possible to stay portable. On the other hand, the meaningfulness of the query must be as high as possible. In principle, these two optimization tendencies can lead to contradictions. The most precise approach is to directly compare the workpiece image with the images of the original sequences. However, that would require extensive space for the database rendering it definitely non-portable. Furthermore, the processing time for the image comparisons (image-by-image / pixel-by-pixel) will be unacceptable. Advantageously, the concept of the invention provides a technical solution which complies with two contradictory goals.

Additional information about the sequences in the database 6 may be used to speed-up the query process. For example, the information about the content changing speed may be stored (static scene; yes or no). It is obvious that a comparison with a picture in a static scene (still picture) may waste of time. Then, only noise may be used to distinguish the images. For such static scenes only one image needs to be checked. The other images of the static scene should be skipped to save time.

The search process is also applicable to small image databases, e.g. private photo collections, or with and online image search engine.

All named characteristics, including those taken from the drawings alone, and individual characteristics, which are disclosed in combination with other characteristics, are considered alone and in combination as important to the invention. Embodiments according to the invention can be fulfilled through individual characteristics or a combination of several characteristics. Features which are combined with the wording "in particular" or "especially" are to be treated as preferred embodiments.

## Claims

1. A method for deriving a feature point based image similarity measure, the method comprising the steps of:
detecting feature points in two images to be compared,
deriving position information of the feature points,
deriving local neighborhood descriptors of the feature points, the local neighborhood descriptors not comprising position information,
the method **characterized in that**
the image similarity measure is derived from distance measures of the local neighborhood descriptors of co-positioned non-repetitive feature points in the two images, wherein a feature point is considered as non-repetitive
- if its local neighborhood descriptor is not similar to that of any other feature point of the image, and/or
- if its local neighborhood descriptor and a second local neighborhood descriptor of a second feature point of the other image are single most similar to each other, and/or
- if its local neighborhood descriptor is similar to that of only one feature point of the other image.

2. The method according to claim 1, wherein the distance measurement is an Euclidian distance measurement between the local neighborhood descriptors, which are vectors of scalars derived from a pixel area around the feature point.

3. The method according to claim 1 or 2, wherein a distance between the two positions of the feature points is determined and the feature points are considered as co-positioned if the distance is below a predetermined threshold.

4. The method according to anyone of the preceding claims, wherein the two images are resized to a same predetermined resolution before the detection of feature points.

5. An apparatus of deriving a feature point based image similarity measure, the apparatus comprising:
a feature point detection unit, equipped and configured to detect feature points in two images to be compared,
a feature point analysis unit, equipped and configured to
- derive position information of the feature points and
- derive local neighborhood descriptors of the feature points, the local neighborhood descriptors not comprising position information,
the apparatus **characterized by**
an image similarity measurement unit equipped and configured to determine the image similarity measure from distance measures of the local neighborhood descriptors of co-positioned non-repetitive feature points in the two images, wherein a feature point is considered as non-repetitive by the image similarity measurement unit
- if its local neighborhood descriptor is not similar to that of any other feature point of the image, and/or
- if its local neighborhood descriptor and a second local neighborhood descriptor of a second feature point of the other image are single most similar to each other, and/or
- if its local neighborhood descriptor is similar to that of only one feature point of the other image.

6. The apparatus according to claim 5, wherein the feature point analysis unit is equipped and configured to perform an Euclidian distance measurement between the local neighborhood descriptors, which are vectors of scalars derived from a pixel area around the feature point.

7. The apparatus according to claim 5 or 6, wherein the feature point analysis unit is equipped and configured to determine a distance between the two positions of the feature points, wherein the feature points are considered as co-positioned if the distance is below a predetermined threshold.

8. The apparatus according to anyone of claims 5 to 7, further comprising a resizing unit equipped and configured to resize the two images to a same predetermined resolution before the detection of feature points.

9. A method of finding, in a set of given images, a most similar one to a workpiece image, the method comprising the steps of:
for each image of the set of given images:
detecting feature points in the image,
deriving position information of the detected feature points,
deriving local neighborhood descriptors of the feature points, the local neighborhood descriptors not comprising position information,
storing the position information and the local neighborhood descriptor of the detected feature points as a fingerprint of the image,
for the workpiece image:
detecting feature points in the workpiece image,
deriving position information of the detected feature points,
deriving local neighborhood descriptors of the feature points, the local neighborhood descriptors not comprising position information,
establishing an image similarity measure between co-positioned non-repetitive feature points in the workpiece image and in the images of the set of given images by performing the following steps for each feature point in the workpiece image:
measuring a distance between the local neighborhood descriptor of the feature point of the workpiece image and
the local neighborhood descriptors stored for the images of the set of given images,
determining a distance between the position of the feature point of the workpiece image and the positions of the feature points in the images of the set of given images,
wherein
the feature points are considered as co-positioned if the distance is below a predetermined threshold and wherein a feature point is considered as non-repetitive
- if its local neighborhood descriptor is not similar to that of any other feature point of the image, and/or
- if its local neighborhood descriptor and a second local neighborhood descriptor of a second feature point of the other image are single most similar to each other, and/or
- if its local neighborhood descriptor is similar to that of only one feature point of the other image and wherein a most similar image of the set of given images is the image having a highest similarity measure within the meaning of having a lowest distance between the local neighborhood descriptor and/or the lowest distance between the position of the feature points.

10. The method according to claim 9, wherein for each image of the set of given images, the detected feature points are minimized before storing the fingerprint of the image comparing the local neighborhood descriptors of the feature points in each image, wherein feature points having similar local neighborhood descriptors are deleted.

11. An apparatus for finding, in a set of given images, a most similar one to a workpiece image, the apparatus comprising:
a database generation unit equipped and configured to:
for each image of the set of given images,
detect feature points in the image,
derive position information of the detected feature points,
derive local neighborhood descriptors of the feature points, the local neighborhood descriptors not comprising position information,
store the position information and the local neighborhood descriptor of the detected feature points as a fingerprint of the image in a database,
a workpiece image fingerprint generation unit equipped and configured to:
for the workpiece image,
detect feature points in the workpiece image,
derive position information of the detected feature points,
derive local neighborhood descriptors of the feature points, the local neighborhood descriptors not comprising position information,
establish an image similarity measure between co-positioned non-repetitive feature points in the workpiece image and the images of the set of given images by performing the following steps for each feature point in the workpiece image:
measure a distance between the local neighborhood descriptor of the feature point of the workpiece image and the local neighborhood descriptors stored for the images of the set of given images,
determine a distance between the position of the feature point of the workpiece image and the positions of the feature points in the images of the set of given images,
wherein
the feature points are considered as co-positioned if the distance is below a predetermined threshold and wherein a feature point is considered as non-repetitive
- if its local neighborhood descriptor is not similar to that of any other feature point of the image, and/or
- if its local neighborhood descriptor and a second local neighborhood descriptor of a second feature point of the other image are single most similar to each other, and/or
- if its local neighborhood descriptor is similar to that of only one feature point of the other image and wherein a most similar image of the set of given images is the image having a highest similarity measure within the meaning of having a lowest distance between the local neighborhood descriptor and/or the lowest distance between the position of the feature points.

12. The apparatus according to claim 11, further comprising a database minimization unit equipped and configured to, for each image of the set of given images, minimize the detected feature points before storing the fingerprint of the image by comparing the local neighborhood descriptors of the feature points in each image, wherein feature points having similar local neighborhood descriptors are deleted.
